# EUROPEAN PATENT SPECIFICATION

(11) **EP 3 705 594 B1**
(45) Date of publication and mention of the grant of the patent: **20.03.2024**
(21) Application number: 18850495.5
(22) Date of filing: 28.08.2018
(51) Int. Cl.: C22C 38/14, C22C 38/06, C21D 8/02, C22C 38/04, C22C 38/16, C22C 38/12, C22C 38/18, C22C 38/20, C22C 38/22, C22C 38/26, C22C 38/32

(54) **HIGH-STRENGTH MULTIPHASE TINNED STEEL RAW PLATE AND MANUFACTURING METHOD THEREFOR**
HOCHFESTE VERZINNTE MEHRPHASEN-STAHLROHPLATTE UND HERSTELLUNGSVERFAHREN DAFÜR
PLAQUE BRUTE EN ACIER ÉTAMÉ MULTIPHASE À RÉSISTANCE ÉLEVÉE ET PROCÉDÉ DE FABRICATION ASSOCIÉ

(30) Priority: 30.08.2017 CN 201710761690
(43) Date of publication of application: 09.09.2020
(73) Proprietor: Baoshan Iron & Steel Co., Ltd., Shanghai 201900 (CN)
(72) Inventor: LIAN, Fuliang, Shanghai 201900 (CN); LIANG, Gaofei, Shanghai 201900 (CN); CHEN, Hongxing, Shanghai 201900 (CN); ZHAO, Shunli, Shanghai 201900 (CN); BAN, Bijun, Shanghai 201900 (CN); LI, Xiujun, Shanghai 201900 (CN); XU, Gang, Shanghai 201900 (CN)
(74) Representative: Kuhnen & Wacker Patent- und Rechtsanwaltsbüro PartG mbB
(86) International application number: PCT/CN2018/102619
(87) International publication number: WO 2019/042268

(56) References cited:
- WO-A1-2008/102006
- WO-A1-2016/060248
- CN-A- 102 286 688
- CN-A- 102 286 688
- CN-A- 102 719 738
- CN-A- 102 719 738
- CN-A- 106 086 643
- CN-A- 108 118 248
- US-A- 4 698 103
- US-A1- 2009 250 147
- US-A1- 2015 010 779

## Description

### Technical Field

The present invention relates to a high-strength multiphase steel tinned raw plate and a manufacturing method therefor.

### Background Art

A tinned steel plate is a packaging material obtained by tinning a surface of a steel plate. Owing to a combination of high strength of the steel plate and high corrosion resistance of the tin layer, the tinned steel plate is widely used for outer packages of foods, beverages, chemicals and the like, for example, two-piece or three-piece cans, barrels, easy-to-open or screwing caps, etc. In recent years, in view of the uninterrupted requirements of energy conservation, emission reduction, cost reduction, and consumption reduction, tinned plate thickness is continuously reduced. For instance, the thickness of DI materials for common beverage cans has been reduced from 0.28-0.29 mm of twenty years ago to 0.21-0.22 mm, and the thickness of tinned plates for easy-to-open caps is reduced from about 0.25 mm of single cold-rolled tinned plates to about 0.18 mm of double cold-rolled tinned plates. In order to guarantee normal use of thinned materials, higher and higher requirements are imposed on tinned plate strength.

WO 2008/102006 A1 discloses a method for producing a high-strength tinned raw plate, wherein the strength of the steel plate is increased by low-temperature annealing, and the elongation of the steel plate is guaranteed by selecting a steel composition having an ultra-low carbon content (5-40 ppm carbon), thereby producing a series of thin tinned raw plates having a yield strength of 500 MPa or higher at the end. However, this strip steel is an ultra-low carbon steel. Hence, the steel making process entails additional vacuum decarburization, leading to increased steel-making cost.

US 2015/0010779 A1 discloses a method for producing a tinned raw plate having a tensile strength of at least 500 MPa and an elongation at break of greater than 5%. The alloy composition of this steel plate is: C<0.1%, N<0.02%, Mn<0.5%, Si<0.04%, Al<0.1%, Cr<0.1%, P<0.03%, Cu<0.1%, Ni<0.1%, Sn<0.04%, Mo<0.04%, V<0.04%, Ti<0.05%, Nb<0.05%, B≤0.005%. By heating to 700 °C or higher at a fast heating rate (75 K/s, preferably greater than 100 K/s), holding for a short time of 1-2 s and cooling at a cooling rate of 100-1200 K/s at a continuous annealing stage, a tinned raw plate having a tensile strength of at least 500 MPa and an elongation at break of greater than 5 % may be obtained. This technique requires rapid advancement of the continuous annealing stage, wherein both the heating rate and the cooling rate are very fast. This imposes very high requirements on the facilities and the precision of operation and control. Hence, it's difficult to realize steady industrial production on a large scale.

CN 101 999 009 A discloses a method for producing a high-strength tinned raw plate having a tensile strength of 500 MPa or higher for containers, wherein the steel composition is: C: 0.01-0.05%, Si: 0.04% or less, Mn: 0.1-1.2%, S: 0.10% or less, Al: 0.001-0.100%, N: 0.10% or less, P: 0.0020-0.100%, and a balance of Fe and unavoidable impurities. The key process of this method is a reduction rate of 20-50 % in a double cold reduction stage. Although the strength of the strip steel obtained by this method is high, the high reduction rate in the double cold reduction stage results in a low elongation of the strip steel, not suitable for applications requiring certain formability.

CN 106 086 643 A discloses a high-strength and high-ductility tin-plated raw sheet and a secondary cold rolling method thereof. The tin-plated raw sheet comprises, by mass percent, 0.65%-0.12% of C, 0.2%-0.8% of Mn, 0.01%-0.08% of Al, 0.003%-0.015% of N and the balance Fe and inevitable impurities. The raw sheet needs to be subjected to secondary cold rolling, the reduction rate of secondary cold rolling is controlled to range from 5 % to 13 %, and the rolling tension ranges from 50 MPa to 100 MPa.

### Summary

An object of the present invention is to provide a high-strength multiphase steel tinned raw plate and a method for manufacturing the same, wherein the properties of the steel plate after baking and the reduction rate of the double cold reduction meet the following relationships: yield strength Rp0.2≥(400+12×DCR) MPa, elongation A≥(25-1.2×DCR)%,and 5%≤DCR≤18%. The tinned raw plate has high strength and good elongation, useful for producing three-piece can bodies, can bottoms, easy-to-open caps, screwing caps and the like which have high requirements on strength and elongation.

To achieve the above object, the technical solution of the invention is defined in claims 1 and 2

Further improvements are subject to the dependent claims.

In the compositional design of the high-strength multiphase steel tinned raw plate according to the present invention:
C: The carbon element is a major strengthening element in the material. In the present invention carbon strengthens the strip steel in the following two ways: one is to strengthen by solid dissolution of carbon in the martensitic structure, and the other one is to strengthen by precipitation of carbon in the form of pearlite sheets or cementite particles. To guarantee the effect of strengthening the strip steel, carbon should be added into the steel plate in an amount of ≥0.081 %. An unduly high amount of carbon tends to precipitate at ferrite grain boundaries in the course of annealing, thereby degrading the plasticity of the steel plate, and negatively affecting the final processing property, welding property, isotropy, particularly properties after baking and heating of the material. Therefore, the carbon content in the steel according to the present disclosure is controlled at 0.081-0.14 %.
Mn: The main function of the manganese element, similar to that of the carbon element in the present invention is to further increase the strength of the steel plate by solid dissolution of manganese. In addition, the manganese element and the sulfur in the steel form MnS, thereby eliminating the hot shortness problem of the steel caused by sulfur, so as to improve the hot working performance of the steel. However, an unduly high amount of manganese tends to cause segregation of manganese in a cast slab and a notable distribution of a banded structure in a hot rolled plate, undesirable for the stamping performance of a final thin plate, particularly in the case where local deformation of a steel strip is large (for example, in a riveting process for producing easy-to-open caps), because the segregation of manganese tends to cause local cracking. Therefore, the manganese content in the steel according to the present disclosure is controlled at 0.2-0.8 %.
Al: The aluminum element mainly functions to remove oxygen from the steel, and may also refine grains. The nitrogen element and the aluminum element in the steel form AlN which precipitates, thereby eliminating the influence of the nitrogen element on the aging of a thin strip in the course of baking and heating. Addition of an excessive amount of aluminum tends to reduce the castability of a slab. Therefore, the aluminum content suitable for the steel of the present invention is controlled at 0.01-0.09 %.
P: The phosphorus element, which is also a solid solution strengthening element, can improve the strength of the steel. However, an unduly high amount of phosphorus will increase the cold shortness and plasticity of a steel plate, and decrease the cold bendability and weldability of the steel. Therefore, the phosphorus content according to the present invention is controlled at 0.01-0.03 %.
N: Solid dissolution of the nitrogen element can increase the strength of the steel greatly. However, an unduly high amount of nitrogen will degrade the baking aging resistance of a thin strip. In addition, the isotropy will be affected too. Therefore, the nitrogen content in the thin steel plate according to the present invention is controlled at 0.002-0.015 %.

In order to obtain a room temperature martensitic phase structure, generation of a certain amount of martensitic phase should be guaranteed in the annealing of the steel plate. For this purpose, the proportions of Mn, Cr, Mo, Cu and other alloy elements are critical. In the present invention the proportions of these alloy elements are controlled to meet 0.21%≤Mn+1.3Cr+3.2Mo+0.5Cu≤0.91%. If the sum is lower than 0.21 %, the martensite content will be too low to impart sufficient performances to the steel plate. If the sum is higher than 0.91 %, it will be difficult to manufacture the steel plate because the process window of double cold reduction should be narrowed to ensure a desired product of strength and elongation of the steel plate. Besides, addition of the boron element can improve the baking aging resistance of the thin steel strip, and reduce loss of elongation after baking the steel plate. Addition of the titanium and niobium elements can influence the austenite grain size in annealing, and further influence the structural morphology and mechanical performances of the multiphase steel at room temperature. Therefore, the contents of Mn, Cr, Mo, Cu, B, Ti, Nb and other elements may be adjusted and controlled as described above in view of the specific requirements of the strength and elongation after baking and aging in practical applications.

The high-strength multiphase steel tinned raw plate according to the present invention requires such an ultimate structural feature that the structure is consisting of ferrite grains, pearlite, martensite and cementite particles, wherein the ferrite has a grain size of ≤7µm in a direction perpendicular to a rolling direction; the pearlite, martensite and cementite particles in the strip steel structure account for 5-20 % of the structure by volume; the martensite in the strip steel structure accounts for 1-5 % of the structure by volume; and the martensite in the strip steel has a carbon solid solution content of ≥ 0.07 %.

Ferrite in a steel plate structure is the most typical structure in common cold-rolled steel. In the present invention
the grain size of ferrite in the tinned raw plate is controlled to be ≤ 7 µm. As such, the strength of the ferrite matrix is ensured by fine grain strengthening. Nevertheless, the high strength requirement cannot be satisfied by refining the ferrite grains alone. Hence, three strengthening phases of pearlite, martensite and cementite particles are also present in the tinned raw plate structure according to the present invention wherein pearlite and martensite are the major strengthening phases, which are converted from austenite by cooling during annealing, wherein austenite itself is formed by heating. Pearlite is consisting of ferrite bands and cementite bands, generally formed at high temperatures during cooling. Martensite is a super-solid solution of ferrite, which is generally formed at low temperatures during cooling, and has the largest effect in strengthening steel.

In order to ensure the strengthening effect of pearlite and martensite, the present invention requires that the pearlite, martensite and cementite particles in the structure should account for 5% or more based on the total volume of the structure. Due to the poor plasticity of pearlite and martensite, excessive pearlite and martensite will reduce the elongation of a thin strip steel. Therefore, the total volume fraction of the pearlite, martensite and cementite particles in the high-strength multiphase steel tinned raw plate is 20 % or less.

In addition, to ensure strengthening the strip steel, martensite in the strip steel structure according to the present invention is required to be 1% or more. To avoid the negative influence of excessive martensite on the plasticity of the strip steel, the martensite structure should be controlled at 5 % or less. Meanwhile, to ensure the strengthening effect of martensite on the strip steel, the carbon solid solution content in martensite in the strip steel according to the present invention is 0.07 % or more.

A method for manufacturing the high-strength multiphase steel tinned raw plate according to the present invention wherein the tinned raw plate has a chemical composition comprising, by mass percentage, C: 0.081-0.14%, Mn: 0.2-0.8%, Al: 0.01-0.09%, P: 0.01-0.03%, N: 0.002-0.015%, further comprising one or more of B: 0.001-0.005%, Cr: 0.005-0.05%, Ti: 0.001-0.1%, Nb: 0.001-0.2%, Cu: 0.005-0.03%, Mo: 0.001-0.008%, and a balance of Fe and unavoidable impurities, wherein the following relationship is met: 0.21%≤Mn+1,3Cr+3.2Mo+0.5Cu≤0.91%, wherein the tinned raw plate is subjected to continuous annealing and double cold reduction in sequence, wherein a temperature T in the continuous annealing stage is (727-100×C-30×Mn-1000×N)°C≤T≤800°C; a hold time is 30 s-50 s; a cooling rate in a zone having a temperature of 250 °C or higher is 50-90 °C/s; wherein a reduction rate of the double cold reduction DCR is 5%≤DCR≤18%.

Further, production steps prior to the continuous annealing of the tinned raw plate include smelting, hot rolling, pickling and single cold reduction.

To ensure generation of pearlite and martensite in the final structure of the multiphase steel tinned raw plate, the temperature in the heating stage of the annealing process for the strip steel should be controlled to be higher than the austenite transformation temperature. C, Mn and N, as the main elements in the steel, may all influence the austenization temperature. Therefore, the continuous annealing temperature T of the strip steel according to the present invention is ≥(727-100×C-30×Mn-1000×N)°C. However, an unduly high annealing temperature will lead to sharp growth of the strip steel grains, thereby reducing the strength of the strip steel. Therefore, the annealing temperature T is ≤ 800 °C. Thus, the annealing temperature T is controlled at (727-100×C-30×Mn-1000×N)°C≤T≤800°C in the continuous annealing stage according to the invention

To ensure complete austenization in the annealing process of the strip steel, the hold time should be ≥ 30 s. The longer the hold time in the annealing, the severer the growth of the strip steel grains. Therefore, with the proviso that austenization of the strip steel is ensured, the hold time is ≤50s. Thus, the hold time is controlled at 30 s-50 s in the continuous annealing stage according to the present invention

According to the present invention the annealing rate dictates the amounts of pearlite and martensite, the spacing between pearlite bands, and the carbon solid solution content in martensite. To ensure the optimal structure of the strip steel, the cooling rate in the zone having a temperature of 250 °C or higher should be ≥50 °C/s. If the cooling rate is too low, pearlite transformation will be more complete, and no martensite will form. In addition, the spacing between the resulting pearlite bands will be large, and the strength of the strip steel will be lowered. It's also required that the cooling rate in the zone having a temperature of 250 °C or higher should be ≤90 °C/s. If the cooling rate is too high, the pearlite transformation will be inhibited, such that there will be excessive martensite in the structure. Although the strength of the strip steel will be increased, a big loss will be caused to the elongation of the strip steel. Therefore, the cooling rate in the zone having a temperature of 250 °C or higher in the continuous annealing stage according to the present invention is controlled at 50-90 °C/s.

After the continuous annealing, the high-strength multiphase steel tinned raw plate according to the present invention is subjected to double cold reduction. The main function of the double cold reduction is to further thin the strip steel, and further increase the strength of the strip steel. Nevertheless, the elongation of the strip steel will be decreased at the same time. Therefore, the reduction rate of the double cold reduction DCR should be ≤ 18 % according to the present invention

Based on the above chemical composition, structure and manufacturing method, after baking at 150-300 °C for 15-60 min, the high-strength multiphase steel tinned raw plate provided according to the present invention has a yield strength Rp0.2≥(400+12×DCR)MPa, and an elongation A≥(25-1.2×DCR)%, wherein DCR represents a reduction rate of double cold reduction, wherein 5%≤DCR≤18%.

The beneficial effects of the invention include:
The carbon content and the manganese equivalent are increased in the alloy composition of the high-strength multiphase steel tinned raw plate according to the present invention As compared with ultra-low carbon steel, this compositional system allows for omission of a vacuum decarburization process in steel making, thereby reducing the steel making cost.

As compared with a rapid continuous annealing process, the annealing temperature in the continuous annealing process according to the present invention is controlled more precisely, and the cooling rate is low. This process has lower requirements on the facilities and the precision of operation and control. Hence, it can control plate shape and produce wide tinned raw plates more easily. In addition, it's easier to realize steady industrial production on a large scale.

The high-strength multiphase steel tinned raw plate according to the present invention can be subjected to double cold reduction. As compared with a single cold reduction process, the double cold reduction process is desirable for further thinning of the strip steel. As compared with a strip steel obtained at a larger double cold reduction rate, the strip steel obtained according to the present invention still maintains a high elongation A≥(25-1.2×DCR)% after baking, wherein DCR represents the reduction rate of double cold reduction, wherein 5%≤DCR≤18%.

### Description of the Drawings

Fig. 1 is a photograph of the metallographical structure of the steel plate of Example 1 according to the present invention
Fig. 2 is a photograph showing the topography of the pearlite + martensite + cementite particles in the metallographical structure of the steel plate of Example 1 according to the present invention

### Detailed Description

The invention will be further illustrated with reference to the following Examples and accompanying drawings.

Table 1 lists the alloy compositions of the Examples and Comparative Examples in the present invention Table 2 shows the features of the main process stages and the features of the phase compositions of the Examples and Comparative Examples in the present invention Table 3 shows the yield strength and elongation properties of the Examples and Comparative Examples after baking (baking temperature 200 °C; baking time 30 min).

### Example 1

The alloy composition of Example 1 is shown in Table 1: C: 0.081%, Mn: 0.5%, Al: 0.05%, P: 0.015%, N: 0.005%, B: 0.001%, Cr: 0.02%, Cu: 0.01%, Mo: 0.001%. The features of the phase composition and the production process for the strip steel are shown in Table 2: the zone of pearlite + martensite + cementite particles accounted for 10 % by volume; the martensite zone accounted for 2 % by volume; the grain size of ferrite was 6.5 µm; and the carbon solid solution content in martensite was 0.082 %. The temperature at the continuous annealing stage for the strip steel was 720 °C; the hold time at the annealing stage was 40 s; the cooling rate in the annealing was 60 °C/s; and the reduction rate of the double cold reduction for the strip steel was 10%. The mechanical performances of the final strip steel baked at 200 °C for 30 min are shown in Table 3: the yield strength Rp0.2 was 564 MPa; and the elongation at break was 18 %.

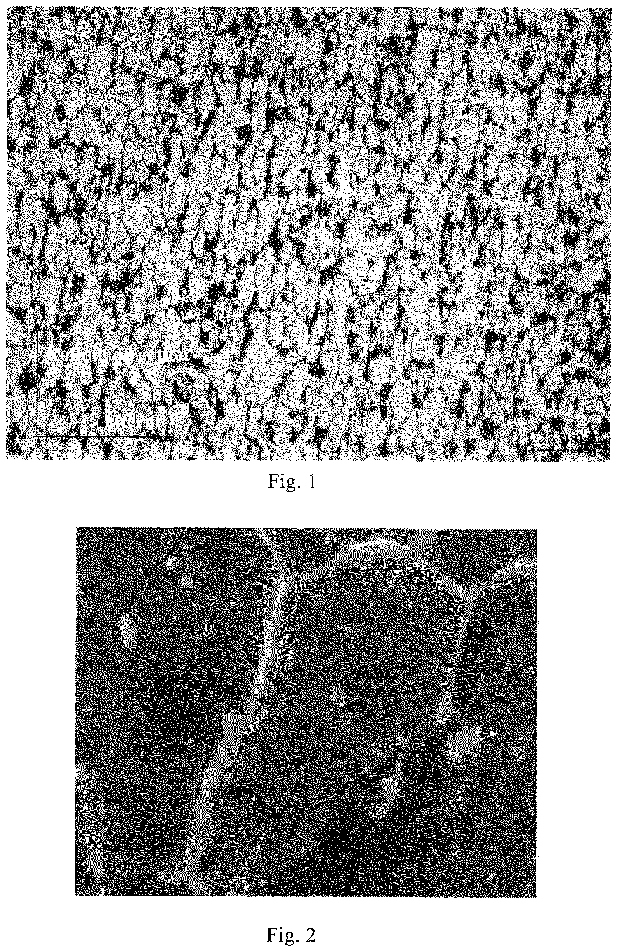

As known from Figs. 1 and 2, the structure of the tinned raw plate in this Example was consisting of ferrite grains, pearlite, martensite and cementite particles, wherein the zone of pearlite + martensite + cementite accounted for 10% by volume; the martensite zone accounted for 2 % by volume; the grain size of ferrite was 6.5 µm (the grain size of ferrite was measured from the metallographical structure shown by Fig. 1 in the transverse direction using the linear intercept method); and the carbon solid solution content in martensite was 0.082 %.

### Example 2

The alloy composition of Example 2 was: C: 0.081%, Mn: 0.5%, Al: 0.05%, P: 0.01%, N: 0.005%, B: 0.003%, Cr: 0.05%, Ti: 0.005%, Nb: 0.2%, Cu: 0.01%, Mo: 0.005%. The features of the phase composition of the strip steel were: the zone of pearlite + martensite + cementite particles accounted for 13 % by volume; the martensite zone accounted for 4 % by volume; the grain size of ferrite was 6.5 µm; and the carbon solid solution content in martensite was 0.095 %. The temperature at the continuous annealing stage for the strip steel was 750 °C; the hold time at the annealing stage was 40 s; the cooling rate in the annealing was 90 °C/s; and the reduction rate of the double cold reduction for the strip steel was 5 %. The mechanical performances of the final strip steel baked at 200 °C for 30 min: the yield strength Rp0.2 was 512 MPa; and the elongation at break was 20.9 %.

### Example 3

The alloy composition of Example 3 was: C: 0.135%, Mn: 0.2%, Al: 0.05%, P: 0.01%, N: 0.005%, B: 0.003%, Cr: 0.005%, Cu: 0.03%, Mo: 0.005%. The features of the phase composition of the strip steel were: the zone of pearlite + martensite + cementite particles accounted for 5 % by volume; the martensite zone accounted for 1.2 % by volume; the grain size of ferrite was 5.3 µm; and the carbon solid solution content in martensite was 0.071 %. The temperature at the continuous annealing stage for the strip steel was 705 °C; the hold time at the annealing stage was 30 s; the cooling rate in the annealing was 50 °C/s; and the reduction rate of the double cold reduction for the strip steel was 5 %. The mechanical performances of the final strip steel baked at 200 °C for 30 min: the yield strength Rp0.2 was 482 MPa; and the elongation at break was 20.2 %.

### Example 4

The alloy composition of Example 4 was: C: 0.14%, Mn: 0.5%, Al: 0.01%, P: 0.015%, N: 0.015%, B: 0.003%, Cr: 0.02%, Ti: 0.1%, Cu: 0.01%, Mo: 0.008%. The features of the phase composition of the strip steel were: the zone of pearlite + martensite + cementite particles accounted for 19 % by volume; the martensite zone accounted for 4.8 % by volume; the grain size of ferrite was 6.2 µm; and the carbon solid solution content in martensite was 0.1 %. The temperature at the continuous annealing stage for the strip steel was 800 °C; the hold time at the annealing stage was 30 s; the cooling rate in the annealing was 90 °C/s; and the reduction rate of the double cold reduction for the strip steel was 18 %. The mechanical performances of the final strip steel baked at 200 °C for 30 min: the yield strength Rp0.2 was 650 MPa; and the elongation at break was 5.5 %.

### Example 5

The alloy composition of Example 5 was: C: 0.1%, Mn: 0.8%, Al: 0.035%, P: 0.015%, N: 0.015%, B: 0.005%, Cr: 0.02%, Ti: 0.001%, Cu: 0.01%. The features of the phase composition of the strip steel were: the zone of pearlite + martensite + cementite particles accounted for 14 % by volume; the martensite zone accounted for 1.5 % by volume; the grain size of ferrite was 6.8 µm; and the carbon solid solution content in martensite was 0.081 %. The temperature at the continuous annealing stage for the strip steel was 750 °C; the hold time at the annealing stage was 50 s; the cooling rate in the annealing was 50 °C/s; and the reduction rate of the double cold reduction for the strip steel was 10%. The mechanical performances of the final strip steel baked at 200 °C for 30 min: the yield strength Rp0.2 was 544 MPa; and the elongation at break was 15 %.

### Example 6

The alloy composition of Example 6 was: C: 0.1%, Mn: 0.5%, Al: 0.09%, P: 0.03%, N: 0.005%, B: 0.003%, Cr: 0.02%, Ti: 0.005%, Nb: 0.001, Cu: 0.005%. The features of the phase composition of the strip steel were: the zone of pearlite + martensite + cementite particles accounted for 5 % by volume; the martensite zone accounted for 2.5 % by volume; the grain size of ferrite was 5.5 µm; and the carbon solid solution content in martensite was 0.09 %. The temperature at the continuous annealing stage for the strip steel was 700 °C; the hold time at the annealing stage was 30 s; the cooling rate in the annealing was 90 °C/s; and the reduction rate of the double cold reduction for the strip steel was 12 %. The mechanical performances of the final strip steel baked at 200 °C for 30 min: the yield strength Rp0.2 was 597 MPa; and the elongation at break was 13 %.

### Example 7

The alloy composition of Example 7 was: C: 0.1%, Mn: 0.5%, Al: 0.09%, P: 0.03%, N: 0.002%, B: 0.003%, Cr: 0.02%, Ti: 0.005%, Cu; 0.01%. The features of the phase composition of the strip steel were: the zone of pearlite + martensite + cementite particles accounted for 14 % by volume; the martensite zone accounted for 3.5 % by volume; the grain size of ferrite was 6.2 µm; and the carbon solid solution content in martensite was 0.089 %. The temperature at the continuous annealing stage for the strip steel was 750 °C; the hold time at the annealing stage was 40 s; the cooling rate in the annealing was 80 °C/s; and the reduction rate of the double cold reduction for the strip steel was 10 %. The mechanical performances of the final strip steel baked at 200 °C for 30 min: the yield strength Rp0.2 was 575 MPa; and the elongation at break was 17 %.

### Example 8

The alloy composition of Example 8 was: C: 0.1%, Mn: 0.5%, Al: 0.05%, P: 0.015%, N: 0.005%, B: 0.003%, Cr: 0.02%, Ti: 0.005%, Cu: 0.01%. The features of the phase composition of the strip steel were: the zone of pearlite + martensite + cementite particles accounted for 19 % by volume; the martensite zone accounted for 1.2 % by volume; the grain size of ferrite was 6.7 µm; and the carbon solid solution content in martensite was 0.080 %. The temperature at the continuous annealing stage for the strip steel was 800 °C; the hold time at the annealing stage was 30 s; the cooling rate in the annealing was 50 °C/s; and the reduction rate of the double cold reduction for the strip steel was 5 %. The mechanical performances of the final strip steel baked at 200 °C for 30 min: the yield strength Rp0.2 was 497 MPa; and the elongation at break was 20.3 %.

### Comparative Example 1

The alloy composition of Comparative Example 1 was: C: 0.07%, Mn: 0.5%, Al: 0.09%, P: 0.03%, N: 0.002%, B: 0.003%, Cr: 0.02%, Ti: 0.005%, Cu: 0.04%. The features of the phase composition of the strip steel were: no pearlite + martensite zone; the grain size of ferrite was 5.2 µm. The temperature at the continuous annealing stage for the strip steel was 690 °C; the hold time at the annealing stage was 40 s; the cooling rate in the annealing was 50 °C/s; and the reduction rate of the double cold reduction for the strip steel was 19 %. The mechanical performances of the final strip steel baked at 200 °C for 30 min: the yield strength Rp0.2 was 645 MPa; and the elongation at break was 0.5 %.

### Comparative Example 2

The alloy composition of Comparative Example 2 was: C: 0.1%, Mn: 0.1%, Al: 0.05%, P: 0.008%, N: 0.005%, B: 0.01%, Cr: 0.02%, Ti: 0.005%, Cu: 0.01%. The features of the phase composition of the strip steel were: the zone of pearlite + martensite + cementite particles accounted for 12 % by volume; the martensite zone accounted for 3.2 % by volume; the grain size of ferrite was 8.2 µm; and the carbon solid solution content in martensite was 0.068 %. The temperature at the continuous annealing stage for the strip steel was 750 °C; the hold time at the annealing stage was 60 s; the cooling rate in the annealing was 50 °C/s; and the reduction rate of the double cold reduction for the strip steel was 10 %. The mechanical performances of the final strip steel baked at 200 °C for 30 min: the yield strength Rp0.2 was 501.3 MPa; and the elongation at break was 8 %.

### Comparative Example 3

The alloy composition of Comparative Example 3 was: C: 0.1%, Mn: 0.5%, Al: 0.005%, P: 0.05%, N: 0.002%, B: 0.003%, Cr: 0.02%, Ti: 0.005%, Cu: 0.01%, Mo: 0.01%. The features of the phase composition of the strip steel were: the zone of pearlite + martensite + cementite particles accounted for 14% by volume; the martensite zone accounted for 7.8% by volume; the grain size of ferrite was 5.7 µm; and the carbon solid solution content in martensite was 0.12%. The temperature at the continuous annealing stage for the strip steel was 750 °C; the hold time at the annealing stage was 40 s; the cooling rate in the annealing was 120 °C/s; and the reduction rate of the double cold reduction for the strip steel was 5%. The mechanical performances of the final strip steel baked at 200 °C for 30 min: the yield strength Rp0.2 was 587 MPa; and the elongation at break was 7.8%.

### Comparative Example 4

The alloy composition of Comparative Example 4 was: C: 0.13%, Mn: 0.5%, Al: 0.05%, P: 0.015%, N: 0.005%, B: 0.003%, Cr: 0.02%, Ti: 0.005%, Cu: 0.01%. The features of the phase composition of the strip steel were: the zone of pearlite + martensite + cementite particles accounted for 21.6 % by volume; the martensite zone accounted for 6.9 % by volume; the grain size of ferrite was 8.4 µm; and the carbon solid solution content in martensite was 0.1 %. The temperature at the continuous annealing stage for the strip steel was 820 °C; the hold time at the annealing stage was 40 s; the cooling rate in the annealing was 80 °C/s; and the reduction rate of the double cold reduction for the strip steel was 10 %. The mechanical performances of the final strip steel baked at 200 °C for 30 min: the yield strength Rp0.2 was 555.8 MPa; and the elongation at break was 10.2 %.

### Comparative Example 5

The alloy composition of Comparative Example 5 was: C: 0.10%, Mn: 0.5%, Al: 0.05%, P: 0.015%, N: 0.02%, B: 0.003%, Cr: 0.10%, Ti: 0.2%, Cu: 0.01%. The features of the phase composition of the strip steel were: the zone of pearlite + martensite + cementite particles accounted for 4 % by volume; the martensite zone accounted for 0.6% by volume; the grain size of ferrite was 5.2 µm; and the carbon solid solution content in martensite was 0.07 %. The temperature at the continuous annealing stage for the strip steel was 750 °C; the hold time at the annealing stage was 20 s; the cooling rate in the annealing was 80 °C/s; and the reduction rate of the double cold reduction for the strip steel was 2%. The mechanical performances of the final strip steel baked at 200 °C for 30 min: the yield strength Rp0.2 was 612.3 MPa; and the elongation at break was 5.9 %.

### Comparative Example 6

The alloy composition of Comparative Example 6 was: C: 0.15%, Mn: 0.9%, Al: 0.05%, P: 0.015%, N: 0.01%, Cr: 0.10%, Ti: 0.2%, Nb: 0.3%. The features of the phase composition of the strip steel were: the pearlite zone accounted for 13 % by volume; the martensite zone accounted for 0 % by volume; and the grain size of ferrite was 7.6 µm. The temperature at the continuous annealing stage for the strip steel was 750 °C; the hold time at the annealing stage was 40 s; the cooling rate in the annealing was 30 °C/s; and no double cold reduction was conducted. The mechanical performances of the final strip steel baked at 200 °C for 30 min: the yield strength Rp0.2 was 454.8 MPa; and the elongation at break was 20.8 %.

**Table 1 (unit: mass percentage)**

| | C | Mn | Al | P | N | B | Cr | Ti | Nb | Cu | Mo |
|---|---|---|---|---|---|---|---|---|---|---|---|
| Ex. 1 | 0.081 | 0.5 | 0.05 | 0.015 | 0.005 | 0.001 | 0.02 | 0 | 0 | 0.01 | 0.001 |
| Ex. 2 | 0.081 | 0.5 | 0.05 | 0.01 | 0.005 | 0.003 | 0.05 | 0.005 | 0.2 | 0.01 | 0.005 |
| Ex. 3 | 0.135 | 0.2 | 0.05 | 0.01 | 0.005 | 0.003 | 0.005 | 0 | 0 | 0.03 | 0.005 |
| Ex. 4 | 0.14 | 0.5 | 0.01 | 0.015 | 0.015 | 0.003 | 0.02 | 0.1 | 0 | 0.01 | 0.008 |
| Ex. 5 | 0.10 | 0.8 | 0.035 | 0.015 | 0.015 | 0.005 | 0.02 | 0.001 | 0 | 0.01 | 0 |
| Ex. 6 | 0.10 | 0.5 | 0.09 | 0.03 | 0.005 | 0.003 | 0.02 | 0.005 | 0.001 | 0.005 | 0 |
| Ex. 7 | 0.10 | 0.5 | 0.09 | 0.03 | 0.002 | 0.003 | 0.02 | 0.005 | 0 | 0.01 | 0 |
| Ex. 8 | 0.10 | 0.5 | 0.05 | 0.015 | 0.005 | 0.003 | 0.02 | 0.005 | 0 | 0.01 | 0 |
| Comp. Ex. 1 | 0.07 | 0.5 | 0.09 | 0.03 | 0.002 | 0.003 | 0.02 | 0.005 | 0 | 0.04 | 0 |
| Comp. Ex. 2 | 0.10 | 0.1 | 0.05 | 0.008 | 0.005 | 0.01 | 0.02 | 0.005 | 0 | 0.01 | 0 |
| Comp. Ex. 3 | 0.10 | 0.5 | 0.005 | 0.05 | 0.002 | 0.003 | 0.02 | 0.005 | 0 | 0.01 | 0.01 |
| Comp. Ex. 4 | 0.13 | 0.5 | 0.05 | 0.015 | 0.005 | 0.003 | 0.02 | 0.005 | 0 | 0.01 | 0 |
| Comp. Ex. 5 | 0.10 | 0.5 | 0.05 | 0.015 | 0.020 | 0.003 | 0.10 | 0.2 | 0 | 0.01 | 0 |
| Comp. Ex. 6 | 0.15 | 0.9 | 0.05 | 0.015 | 0.01 | 0 | 0.10 | 0.2 | 0.3 | 0 | 0 |

**Table 2**

| | Phase Features | | | | Production Process | | | |
|---|---|---|---|---|---|---|---|---|
| | Pearlite+mart ensite+cement ite particles (%) | Marten site (%) | Ferrite grain size (µm) | C solid solution content in martensite (%) | Continu ous annealin g temperat ure (°C) | Hold time in annealin g (s) | Cooling rate in annealing (°C/s) | Reduction rate of double cold reduction (%) |
| Ex. 1 | 10 | 2 | 6.5 | 0.082 | 720 | 40 | 60 | 10 |
| Ex. 2 | 13 | 4 | 6.5 | 0.095 | 750 | 40 | 90 | 5 |
| Ex. 3 | 5 | 1.2 | 5.3 | 0.071 | 705 | 30 | 50 | 5 |
| Ex. 4 | 19.0 | 4.8 | 6.2 | 0.1 | 800 | 30 | 90 | 18 |
| Ex. 5 | 14 | 1.5 | 6.8 | 0.081 | 750 | 50 | 50 | 10 |
| Ex. 6 | 5 | 2.5 | 5.5 | 0.090 | 700 | 30 | 90 | 12 |
| Ex. 7 | 14 | 3.5 | 6.2 | 0.089 | 750 | 40 | 80 | 10 |
| Ex. 8 | 19.0 | 1.2 | 6.7 | 0.080 | 800 | 30 | 50 | 5 |
| Comp. Ex. 1 | 0 | 0 | 5.2 | -- | 690 | 40 | 50 | 19 |
| Comp. Ex. 2 | 12 | 3.2 | 8.2 | 0.068 | 750 | 60 | 50 | 10 |
| Comp. Ex. 3 | 14 | 7.8 | 5.7 | 0.12 | 750 | 40 | 120 | 5 |
| Comp. Ex. 4 | 21.6 | 6.9 | 8.4 | 0.10 | 820 | 40 | 80 | 10 |
| Comp. Ex. 5 | 4 | 0.6 | 5.2 | 0.070 | 750 | 20 | 80 | 2 |
| Comp. Ex. 6 | 13 | 0 | 7.6 | -- | 750 | 40 | 30 | 0 |

**Table 3**

| | Rp0.2 (MPa) | A (%) |
|---|---|---|
| Ex. 1 | 564 | 18 |
| Ex. 2 | 512 | 20.9 |
| Ex. 3 | 482 | 20.2 |
| Ex. 4 | 650 | 5.5 |
| Ex. 5 | 544 | 15 |
| Ex. 6 | 597 | 13 |
| Ex. 7 | 575 | 17 |
| Ex. 8 | 497 | 20.3 |
| Comp. Ex. 1 | 645 | 0.5 |
| Comp. Ex. 2 | 501.3 | 8 |
| Comp. Ex. 3 | 587 | 7.8 |
| Comp. Ex. 4 | 555.8 | 10.2 |
| Comp. Ex. 5 | 612.3 | 5.9 |
| Comp. Ex. 6 | 454.8 | 20.8 |

## Claims

1. A high-strength multiphase steel tinned raw plate, having a chemical composition comprising, by mass percentage, C: 0.081-0.14%, Mn: 0.2-0.8%, Al: 0.01-0.09%, P: 0.01-0.03%, N: 0.002-0.015%, further comprising one or more of B: 0.001-0.005%, Cr: 0.005-0.05%, Ti: 0.001-0.1%, Nb: 0.001-0.2%, Cu: 0.005-0.03%, Mo: 0.001-0.008%, and a balance of Fe and unavoidable impurities, wherein the following relationship is met: 0.21%≤Mn+1.3Cr+3.2Mo+0.5Cu≤0.91%, the high-strength multiphase steel tinned raw plate has a structure consisting of ferrite grains, pearlite, martensite and cementite particles, the ferrite in the structure of the high-strength multiphase steel tinned raw plate has a grain size of ≤7 µm, the pearlite + martensite + cementite particles in the structure of the high-strength multiphase steel tinned raw plate have a volume fraction of 5-20 %, the martensite in the structure of the high-strength multiphase steel tinned raw plate has a volume fraction of 1-5 % and carbon solid solution content of ≥0 07/,. wherein, after baking, at 150° - 300°C for 15-60 min, the high-strength multiphase steel tinned raw plate has a yield strength Rp0.2≥(400+12×DCR)MPa, and an elongation A≥(25-1.2×DCR)%, wherein DCR represents a reduction rate of double cold reduction, wherein 5%≤DCR≤18%.

2. A method for manufacturing the high-strength multiphase steel tinned raw plate of claim 1, wherein the tinned raw plate has a chemical composition comprising, by mass percentage, C: 0.081-0.14%, Mn: 0.2-0.8%, Al: 0.01-0.09%, P: 0.01-0.03%, N: 0.002-0.015%, further comprising one or more of B: 0.001-0.005%, Cr: 0.005-0.05%, Ti: 0.001-0.1%, Nb: 0.001-0.2%, Cu: 0.005-0.03%, Mo: 0.001-0.008%, and a balance of Fe and unavoidable impurities, wherein the following relationship is met: 0.21%≤Mn+1.3Cr+3.2Mo+0.5Cu≤0.91%, wherein the tinned raw plate is subjected to continuous annealing and double cold reduction in sequence, wherein a temperature T in the continuous annealing stage is (727-100×C-30×Mn-1000×N)°C≤T≤800°C; a hold time is 30s-50s; a cooling rate in a zone having a temperature of 250°C or higher is 50-90°C/s; wherein a reduction rate of the double cold reduction DCR is 5%≤DCR≤18%.

3. The method of claim 2 for manufacturing the high-strength multiphase steel tinned raw plate, wherein production steps prior to the continuous annealing of the tinned raw plate include smelting, hot rolling, pickling and single cold reduction.

## Patentansprüche

1. Hochfeste, verzinnte Mehrphasen-Rohstahlplatte, mit einer chemische Zusammensetzung, die nach Massenprozent Folgendes aufweist: C: 0,081-0,14 %, Mn: 0,2-0,8 %, Al: 0,01-0,09 %, P: 0,01-0,03 %, N: 0,002-0,015 %, ferner aufweisend eines oder mehrere von: B: 0,001-0,005 %, Cr: 0,005-0,05 %, Ti: 0,001-0,1 %, Nb: 0,001-0,2 %, Cu: 0,005-0,03 %, Mo: 0,001-0,008 % und einen Rest aus Fe und unvermeidbaren Unreinheiten, wobei das folgende Verhältnis erfüllt ist: 0,21%≤Mn+1,3Cr+3,2Mo+0,5Cu≤0,91 %, wobei die hochfeste, verzinnte Mehrphasen-Rohstahlplatte eine Struktur aufweist, die aus Ferritkörnern, Perlit-, Martensit- und Zementitpartikeln besteht, wobei das Ferrit in der Struktur der hochfesten, verzinnten Mehrphasen-Rohstahlplatte eine Korngröße von ≤ 7 µm aufweist, die Perlit-+Martensit-+Zementitpartikel in der Struktur der hochfesten, verzinnten Mehrphasen-Rohstahlplatte einen Volumenanteil von 5-20 % aufweisen, der Martensit in der Struktur der hochfesten, verzinnten Mehrphasen-Rohstahlplatte einen Volumenanteil von 1-5 % und einen Kohlenstofffestlösungsgehalt von ≥ 0 07/ aufweist, wobei nach dem Backen bei 150-300 °C für 15-60 Minuten die hochfeste, verzinnte Mehrphasen-Rohstahlplatte eine Streckgrenze Rp0,2(400+12×DCR)MPa und eine Längung A≥(25-1,2×DCR)% aufweist, wobei DCR eine Reduktionsrate der Doppelkaltreduktion darstellt, wobei 5%≤DCR≤18%.

2. Verfahren zum Herstellen der hochfesten, verzinnten Mehrphasen Rohstahlplatte nach Anspruch 1, wobei die verzinnte Rohplatte eine chemische Zusammensetzung aufweist, die nach Massenprozent Folgendes aufweist: C: 0,081-0,14 %, Mn: 0,2-0,8 %, Al: 0,01-0,09 %, P: 0,01-0,03 %, N: 0,002-0,015 %, ferner aufweisend eines oder mehrere von: B: 0,001-0,005 %, Cr: 0,005-0,05 %, Ti: 0,001-0,1 %, Nb: 0,001-0,2 %, Cu: 0,005-0,03 %, Mo: 0,001-0,008 % und einen Rest aus Fe und unvermeidbaren Unreinheiten, wobei das folgende Verhältnis erfüllt ist: 0,21%≤Mn+1,3Cr+3,2Mo+0,5Cu≤0,91 %, wobei die verzinnte Rohplatte nacheinander einem Durchlaufglühen und einer Doppelkaltreduktion unterzogen wird, wobei eine Temperatur T in der Durchlaufglühstufe (727-100×C-30×Mn-1000×N)°C≤T≤800 °C beträgt; eine Haltedauer 30s-50s beträgt; eine Kühlrate in einer Zone mit einer Temperatur von 250 °C oder mehr 50-90°C/s beträgt, wobei eine Reduktionsrate der Doppelkaltreduktion DCR 5%≤DCR≤18% beträgt.

3. Verfahren nach Anspruch 2 für die Herstellung der hochfesten, verzinnten Mehrphasen-Rohstahlplatte, wobei Produktionsschritte vor dem Durchlaufglühen der verzinnten Rohplatte Schmelzen, Heißwalzen, Beizen und Einfachkaltreduktion beinhalten.

## Revendications

1. Plaque brute étamée en acier multiphase de résistance élevée, ayant une composition chimique comprenant, en pourcentage en masse, C : 0,081-0,14 %, Mn : 0,2-0,8 %, Al : 0,01-0,09 %, P : 0,01-0,03 %, N : 0,002-0,015 %, comprenant de plus un ou plusieurs de B : 0,001-0,005 %, Cr : 0,005-0,05 %, Ti : 0,001-0,1 %, Nb : 0,001-0,2 %, Cu : 0,005-0,03 %, Mo : 0,001-0,008 %, et un reste de Fe et d'impuretés inévitables, dans laquelle la relation suivante est remplie : 0,21 %≤Mn+1,3Cr+3,2Mo+0,5Cu≤0,91 %, la plaque brute étamée en acier multiphase de résistance élevée présente une structure consistant en grains de ferrite, particules de perlite, martensite et cémentite, la ferrite dans la structure de la plaque brute étamée en acier multiphase de résistance élevée présente une taille de grain ≤ 7 µm, les particules de perlite + martensite + cémentite dans la structure de la plaque brute étamée en acier multiphase de résistance élevée présentent une fraction de volume de 5-20 %, la martensite dans la structure de la plaque brute étamée en acier multiphase de résistance élevée présente une fraction de volume de 1-5 % et une teneur de solution solide de carbone ≥ 0,7 %, dans laquelle après cuisson, à 150° - 300°C pendant 15-60 min, la plaque brute étamée en acier multiphase de résistance élevée présente une limite d'élasticité Rp0,2≥(400+12×DCR)MPa, et un allongement A≥(25-1,2×DCR)%, dans laquelle DCR représente un taux de réduction de double réduction à froid, dans laquelle 5%≤DCR≤18 %.

2. Procédé pour la fabrication de la plaque brute étamée en acier multiphase de résistance élevée selon la revendication 1, dans lequel la plaque brute étamée présente une composition chimique comprenant, en pourcentage en masse, C : 0,081-0,14 %, Mn : 0,2-0,8 %, Al : 0,01-0,09 %, P : 0,01-0,03 %, N : 0,002-0,015 %, comprenant de plus un ou plusieurs de B : 0,001-0,005 %, Cr : 0,005-0,05 %, Ti : 0,001-0,1 %, Nb : 0,001-0,2 %, Cu : 0,005-0,03 %, Mo : 0,001-0,008 %, et un reste de Fe et d'impuretés inévitables, dans laquelle la relation suivante est remplie : 0,21 %≤Mn+1,3Cr+3,2Mo+0,5Cu≤0,91 %, dans lequel la plaque brute étamée est soumise dans l'ordre à un recuit continu et à une double réduction à froid, dans lequel une température T dans l'étape de recuit continu est (727-100xC-30xMn-1 000×N)°C<T<800°C ; une durée de maintien est 30 s-50 s ; une vitesse de refroidissement dans une zone ayant une température de 250°C ou supérieure est 50-90°C/s ; dans lequel un taux de réduction de la double réduction à froid DCR est 5 %≤DCR≤18 %.

3. Procédé selon la revendication 2 pour la fabrication de la plaque brute étamée en acier multiphase de résistance élevée, dans lequel des étapes de production avant le recuit continu de la plaque brute étamée comprennent une fusion, un laminage à chaud, un décapage et une simple réduction à froid.
